# EUROPÄISCHE PATENTSCHRIFT

(11) **EP 4 103 299 B1**
(45) Veröffentlichungstag und Bekanntmachung des Hinweises auf die Patenterteilung: **07.01.2026**
(21) Anmeldenummer: 21704455.1
(22) Anmeldetag: 04.02.2021
(51) Int. Cl.: B01D 29/54, B01D 15/18, B01D 15/22, B01D 29/56, B01D 35/30, B01D 15/12

(54) **EINWEG-VORRICHTUNG ZUR SEPARATION ODER AUFREINIGUNG EINES GROSSEN VOLUMENS EINES STOFFGEMISCHS UND VERWENDUNG DER EINWEG-VORRICHTUNG**
SINGLE-USE DEVICE FOR THE SEPARATION OR FILTERING OF A LARGE VOLUME OF A MIXTURE OF SUBSTANCES AND USE OF THE DEVICE
DISPOSITIF À USAGE UNIQUE POUR SÉPARER OU PURIFIER UN VOLUME IMPORTANT DE MÉLANGE DE SUBSTANCES ET L'USAGE DU DISPOSITIF

(30) Priorität: 14.02.2020 DE 102020103925
(43) Veröffentlichungstag der Anmeldung: 21.12.2022
(73) Patentinhaber: Sartorius Stedim Biotech GmbH, 37079 Göttingen (DE)
(72) Erfinder: LOEWE, Thomas, 37079 Goettingen (DE); HANDT, Sebastian, 37079 Goettingen (DE); SCHLACK, Stefan, 37083 Goettingen (DE); LEUTHOLD, Martin, 37079 Goettingen (DE)
(74) Vertreter: Novagraaf International SA
(86) Internationale Anmeldenummer: PCT/EP2021/052715
(87) Internationale Veröffentlichungsnummer: WO 2021/160521

(56) Entgegenhaltungen:
- WO-A1-2008/127087
- WO-A1-2011/152788
- WO-A1-2016/015952
- WO-A1-2016/177650
- WO-A1-2019/096502
- WO-A1-2019/185356
- DE-A1- 102017 111 133
- US-A1- 2017 137 461

## Beschreibung

Die Erfindung betrifft eine Einweg-Vorrichtung zur Separation oder Aufreinigung eines großen Volumens eines Stoffgemischs.

Allgemein finden in der pharmazeutischen Fertigung von hochwertigen Wirkstoffen Einweg-Vorrichtungen aufgrund der damit erreichbaren hohen Flexibilität sowie Einsparung von Zeit, Investitionen und Betriebsaufwand wie Reinigung und deren Validierung und Überprüfung zunehmend Verbreitung. Einweg-Vorrichtungen werden verstärkt für einen größeren Maßstab (Produktionsprozesse mit großen Volumina) gewünscht, wobei die Kosten für solche Systeme nicht unrealistisch hoch anwachsen sollen.

Die WO 2017/032560 A1 zeigt eine vollständig vorsterilisierbare, anschlussfertige und integritätstestbare Einweg-Filtrationsvorrichtung, die für großvolumige Filtrationsprozesse ausgelegt ist. Diese Einweg-Filtrationsvorrichtung umfasst eine Mehrzahl von Einweg-Filtercapsulen einer Standardgröße, die in einem vorgegebenen Raster angeordnet und durch Leitungen miteinander verbunden sind. Die Filtercapsulen werden von einer starren Halterung getragen. Für die Entlüftung der Gesamteinheit der Filtercapsulen kann ein gemeinsamer Luftfilter vorgesehen sein.

Aus der DE 102017 111 133 A1 ist eine vorkonfigurierte Einweg-Filtrationsvorrichtung bekannt. Die Filtrationsvorrichtung umfasst eine Mehrzahl durch starre Leitungen miteinander verbundener Einweg-Filtercapsulen, die in einem durch eine starre Halterung universell vorgegebenen Raster fest angebracht sind. Bei dieser Filtrationsvorrichtung ist in eine Entlüftungsleitung zwischen einem Entlüftungsanschluss und einem zur Entlüftung aller Filtercapsulen vorgesehenen Steril-Luftfilter ein druckstabiles Schauglas integriert. Das Schauglas erlaubt es, zum Luftfilter hochsteigendes Medium für den Operator sichtbar zu machen. Sobald der Operator erkennt, dass Wasser oder sonstiges Medium zum Luftfilter hochsteigt, schließt er ein zugehöriges Entlüftungsventil in der Leitung und ergreift ggf. weitere Maßnahmen.

Die bekannten Filtrationsvorrichtungen können mittels Steril-Konnektoren oder Schlauchverschweißung, oder unsteril, beispielsweise durch Tri-Clamp-Verbindungen, in einen Filtrationsstrang einer Prozessanordnung integriert werden und sind somit nach der Auslieferung beim Anwender "ready to use". Eine Sterilisation der Filtrationsvorrichtungen schon vor der Auslieferung ist möglich.

Die WO 2008/127087 A1 beschreibt ein chromatographisches System mit mehreren miteinander verbundenen Membranadsorberpatronen, wobei wenigstens einige der Patronen in Serie geschaltet sind. Die Patronen sind durch modulare Ventilkassetten verbunden, die zu einer Ventileinheit 28 zusammengepresst sind. Die Ventileinheit ist zwischen Systemeinlässen und -auslässen und den Patronen gekoppelt. Die Patronen können durch automatisches Umschalten der Ventile verschiedenen Prozessschritten unterzogen werden.

In der WO 2019/185356 A1 ist eine konfigurierbare Vorrichtung zur flexiblen Bereitstellung von Verbindungen und/oder Funktionen in einem biopharmazeutischen Prozess gezeigt. Die Vorrichtung umfasst einen Körper, in dem vorgegebene Leitungsabschnitte und Steckplätze durch Ausnehmungen im Material des Körpers gebildet sind. Die konfigurierbare Vorrichtung umfasst ferner mehrere Funktionselemente, die in die Steckplätze einsetzbar sind.

Aus der WO 2011/152788 A1 ist eine Parallelanordnung von Chromatographiesäulenmodulen bekannt, die in einem starren Gehäuse gestapelt sind. Auf jeder Seite des Stapels ist ein Fluidverteilungsmodul mit einem Einlass bzw. einem Auslass vorgesehen. Der Einlass in dem einen Fluidverteilungsmodul ist mit einem zentralen Fluidanschluss verbunden, der wiederum mit mehreren peripheren Fluidanschlüssen verbunden werden kann, um die Säulenmodule parallel zu schalten. Im anderen Fluidverteilungsmodul sind in entsprechender Weise die mit den Auslässen der Säulenmodule verbundenen Fluidanschlüsse zu einem zentralen Fluidanschluss geführt, der mit dem Auslass verbunden ist.

Aufgabe der Erfindung ist es, mithilfe einer optimierten und flexiblen Einweg-Vorrichtung die Separation oder Aufreinigung eines großen Volumens eines Stoffgemischs anwenderseitig zu vereinfachen und sicherer zu gestalten.

Gelöst wird diese Aufgabe durch eine Einweg-Vorrichtung mit den Merkmalen des Anspruchs 1. Vorteilhafte und zweckmäßige Ausgestaltungen der erfindungsgemäßen Einweg-Vorrichtung sind in den Unteransprüchen angegeben.

Die erfindungsgemäße Einweg-Vorrichtung zur Separation oder Aufreinigung eines großen Volumens eines Stoffgemischs umfasst eine Mehrzahl von Membranchromatographiemodulen, die in einem vorgegebenen Raster fest angebracht sind. Die Einweg-Vorrichtung umfasst ferner ein Leitungssystem zur Anbindung der Membranchromatographiemodule und zur Verbindung der Membranchromatographiemodule untereinander. Die Membranchromatographiemodule, hinsichtlich Membranadsorbertyp, Bauart und/oder Baugröße, und/oder die Leitungen des Leitungssystems sind für einen Separations- oder Aufreinigungsprozess hinsichtlich der Betriebsweise vorkonfiguriert oder vorkonfigurierbar.

Im Hinblick auf den Anwendungsbereich der erfindungsgemäßen Einweg-Vorrichtung ist zwischen kleinen Medienvolumen, wie sie etwa im Labor bei der Entwicklung eines neuen Prozesses benutzt werden (Labormaßstab), und großen Medienvolumen, die bei Produktionsprozessen umgesetzt werden (Produktionsmaßstab), zu unterscheiden. Obwohl eine klare Abgrenzung zwischen kleinen und großen Medienvolumen nicht ohne Weiteres möglich ist, sind der Veröffentlichung "Membranadsorber - Chromatographische Aufreinigung in neuen Dimensionen" von Stefan Fischer-Frühholz, GIT Labor-Fachzeitschrift 06/2004, S. 603-605, GIT-Verlag GmbH & Co. KG, Darmstadt, im Internet abgerufen unter
http://microsite.sartorius.com/en/biotechnology/laboratory/products applications/ membrane adsorbers/literature/pdfs/Fischer-F 2004 MA Aufreinigung in neuen Dimensionen.pdf,
Anhaltspunkte dafür zu entnehmen, welche Stoffgemischmengen- bzw. Flussraten-Bereiche eher der Analytik und welche Mengen- bzw. Flussraten-Bereiche eher der Produktion zuzuordnen sind. Grundsätzlich fallen aber - unabhängig vom jeweiligen konkreten Anwendungsbereich (Vakzine, Antikörper, etc.) - Mengen unter einem Liter typischerweise unter den Labormaßstab.

Die Erfindung beruht auf der Erkenntnis, dass sich mit geeigneten Maßnahmen großvolumige Membranchromatographie-Prozesse einfach und dennoch variabel durchführen lassen. Die Membranchromatographie ist für Polishing-Anwendungen (Entfernung insbesondere von Viren, DNA sowie Host-Cell-Protein). Weitere typische Anwendungen sind die Konzentration, Aufreinigung und Entsalzung von Peptiden, Flow-to-Waste und Analytensammlung, Proteinaufreinigung und Probenvorbereitung. Ein neueres Einsatzgebiet ist die Virenaufreinigung in Impfstoffproduktionen. In den Membranchromatographiemodulen der erfindungsgemäßen Einweg-Vorrichtung werden dünne, synthetische, poröse Membranen verwendet, die einlagig oder mehrlagig sein können. Die Oberflächen der Membranen können in bekannter Weise z. B. mit Liganden modifiziert sein, um bestimmte Moleküle binden zu können. Die Membranen können auch aus Vliesmaterialien (Faserlagen) gebildet sein, welche ebenfalls modifiziert sind.

Dank der Mehrzahl von Membranchromatographiemodulen, die in einem vorgegebenen Raster fest angebracht sind, jedoch hinsichtlich Art der Membranchromatographiemodule und Verbindungen der Leitungen vorkonfiguriert oder vorkonfigurierbar sind, sind mit der erfindungsgemäßen Einweg-Vorrichtung spezielle, individuell gestaltete Prozesse im Produktionsmaßstab bei verhältnismäßig kleinem Platzbedarf für die Einweg-Vorrichtung realisierbar. Aufgrund des vorgegebenen Rasters für die Module können die vorzugsweise starren Leitungen des Leitungssystems sehr kurz ausfallen, sodass der Material- und Montageaufwand minimiert ist. Die Leitungen lassen sich so konfigurieren, dass nur vergleichsweise kleine Totvolumen verbleiben. Insbesondere kann bei einer Leitungsanordnung, mit der die Membranchromatographiemodule parallel angeströmt werden (Parallelisierung), eine gleichmäßige Anströmung gewährleistet werden (hierauf wird später noch genauer eingegangen). Bei einem Pufferwechsel ist eine vergleichsweise geringe Rückvermischung zu erwarten, sodass beispielsweise nach der Reinigung eine geringere Menge Spülmedium ausreicht.

Die modular aufgebaute Einweg-Vorrichtung kann nach der Bestückung mit den Membranchromatographiemodulen und deren Verbindungen als Ganzes hermetisch dicht verpackt und im Anschluss vorsterilisiert (insbesondere durch Gamma- oder Heißdampfsterilisation) werden, sodass sie nach der Auslieferung beim Anwender sofort in Betrieb genommen werden kann, ohne dass noch Komponenten hinzugefügt oder fixiert werden müssen.

Vorzugsweise sind wenigstens einige der Membranchromatographiemodule als Wickelmodule ausgebildet aufgrund ihrer hohen Packungsdichte und der Vielfalt an Kombinationsmöglichkeiten. Insbesondere bieten sie die Möglichkeit, Prozesse einfach durch Parallelisierung zu vergrößern.

Bei einer vorteilhaften Ausführungsform der erfindungsgemäßen Einweg-Vorrichtung ist es von besonderer Bedeutung, dass sie wenigstens zwei voneinander getrennte Eingänge und vorzugsweise auch mehrere Ausgänge aufweist, die unterschiedlichen Medien zugewiesen sind. Dadurch ist es möglich, die Module ohne großen Aufwand mit unterschiedlichen Medien zu beschicken, was insbesondere im Hinblick auf die Prozessschritte Äquilibrieren/Waschen, Beladen und Elution vorteilhaft ist. Dank der mehreren getrennten Ein- und Ausgänge müssen die mit den Modulen verbundenen Leitungen nicht mehr gespült werden. Puffer können direkt in die Module gelangen. Es müssen keine Schläuche und/oder Plastikflansche mit einem Ventilblock vorgeschaltet werden. Die Eingänge bzw. Ausgänge können mit einem Konnektor versehen werden, welcher wiederum direkt mit einem Puffertank verbunden werden kann. Es ist keine wechselnde Konnektierung bzw. Diskonnektierung mehr nötig. All diese Vorteile führen zu einer Risikominimierung, insbesondere im Hinblick auf fehlerhafte Beschickung und unerwünschte Vermischung bzw. Verunreinigung der Medien.

Grundsätzlich können auch die Membranchromatographiemodule selbst wenigstens zwei voneinander getrennte Eingänge und vorzugsweise auch mehrere Ausgänge aufweisen. Eine solche Ausbildung der Module kann insbesondere bei einer Reihenschaltung der Module vorteilhaft sein.

Gemäß einer bevorzugten Ausführungsform der erfindungsgemäßen Einweg-Vorrichtung ist wenigstens einem Membranchromatographiemodul, insbesondere einem Wickelmodul, ein Vorfilter vorgeschaltet, wobei der Vorfilter vorzugsweise ein plissiertes Filterelement enthält. Ein solcher Vorfilter dient dazu, Aggregate bzw. Verklumpungen zu entfernen. Es empfiehlt sich eine Porengröße von etwa 0,45 µm.

Wenigstens einige der Leitungen des Leitungssystems sind vorzugsweise als starre Leitungen ausgebildet. Die starren Leitungen, insbesondere eine starre gemeinsame Eingangsleitung und/oder eine starre gemeinsame Ausgangsleitung für mehrere Membranchromatographiemodule der Einweg-Vorrichtung, können als druckstabile Rohre mit definiertem Durchmesser ausgeführt sein. Das bedeutet, dass der Durchmesser nicht willkürlich gewählt ist und nicht während des Betriebs infolge von Materialdehnung o. ä. variiert. Dadurch ergibt sich beim Anströmen der Membranchromatographiemodule eine gleichmäßige Druckverteilung und eine gleichmäßige Strömungsgeschwindigkeit des Mediums. Dies ist bei einer Verschaltung der Membranchromatographiemodule mit (dünnen) Schläuchen nicht ohne Weiteres gegeben, da typischerweise unterschiedliche Schlauchlängen und unterschiedliche Schlauchdurchmesser vorhanden wären, deren Konstanz während des Betriebs, gerade bei hohem und schwankendem Druck, nicht gewährleistet werden kann.

Die Wahl des konkreten Durchmessers einer starren Rohrleitung für eine erfindungsgemäße Einweg-Vorrichtung basiert auf folgenden Erkenntnissen und Überlegungen: Es werden typische Flussraten von Adsorbern und eine maximale Flussgeschwindigkeit von 2,5 m/s (empfohlen, um Druckverlust und Scherkräfte klein zu halten) zugrunde gelegt. Wenn man die freie Querschnittsfläche einer Zufuhrleitung in das Verhältnis zum Adsorbervolumen setzt, ergibt sich daraus, dass die freie Querschnittsfläche mindestens 1,5 cm² je Liter Membranvolumen sein sollte, vorzugsweise mindestens 2 cm²/L. Im Hinblick auf die Vermeidung von unnötigem Totvolumen sollte der Wert nicht größer als 5 cm²/L sein. Aus diesen Vorgaben lässt sich dann ein geeigneter Durchmesser für die Rohrleitung bestimmen.

Allgemein sind starre Rohrleitungen im Vergleich zu Schlauchleitungen robuster, druckbeständiger und sicherer, d. h. die Ausfallsicherheit ist höher. Ein Prozess kann schneller durchgeführt werden, da höhere Betriebsdrücke möglich sind.

Zudem ist bei der Verwendung von starren Verteilerrohren vorteilhaft, dass durch ein gemeinsames Anströmvolumen eine Strömungsberuhigung resultiert und Druckstöße vermindert werden.

Je nach Art und Anforderungen des mit der erfindungsgemäßen Einweg-Vorrichtung durchzuführenden Prozesses können die Membranchromatographiemodule auf verschiedene Weise angeordnet (geschaltet) sein. Gemäß der Erfindung sind vorkonfigurierte Betriebsweisen möglich, bei denen (i) einige, vorzugsweise alle Membranchromatographiemodule parallel angeströmt werden (nachfolgend als Parallelisierung bezeichnet), oder (ii) wenigstens eine Gruppe von Modulen parallel zu einer weiteren Gruppe von Modulen angeströmt wird, während die Module innerhalb der Gruppen sequentiell angeströmt werden.

Im Hinblick auf die Auswertung der Messergebnisse ist es bei einer Parallelisierung (Betriebsart (i)) wichtig, dass die Strömungswege durch die einzelnen Membranchromatographiemodule jeweils in der Summe gleich lang sind (Weg vom Anströmanschluss durch das Modul 1 bis zum Abströmanschluss = Weg vom Anströmanschluss durch das Modul 2 bis zum Abströmanschluss etc.). Wenn z. B. der Weg vom Anströmanschluss bis zum Eingang des Moduls beim ersten Modul kurz und beim zweiten Modul lang ist, muss dementsprechend der Weg vom Ausgang bis zum Abströmanschluss beim ersten Modul lang und beim zweiten Modul kurz sein. Nur so können scharf abgegrenzte Elutionspeaks mit schmaler Breite erzielt werden. Im Beschickungsschritt wird auf diese Weise eine frühzeitige Überladung eines Moduls vermieden.

Die Betriebsart (ii) hat den Vorteil, dass bei einem Membrandurchbruch in einem der Membranchromatographiemodule das Protein vom nachfolgenden Membranchromatographiemodul aufgefangen werden kann. Grundsätzlich gilt dieser Vorteil für alle Betriebsarten, bei denen zumindest einige Module sequentiell geschaltet sind. Die Gesamtkapazität der Einweg-Vorrichtung wird entsprechend besser ausgenutzt,

Gemäß einem besonderen Aspekt der Erfindung sind in den Leitungen des Leitungssystems an mehreren Stellen automatisierte Ventile vorgesehen, die von einer Steuereinheit gesteuert werden. An diesen Stellen kann der Fluss des durchströmenden Mediums gezielt freigegeben oder unterbrochen werden, um unterschiedliche Strömungswege während eines Prozesses zu realisieren.

An den Stellen im Leitungssystem, an denen die Ventile angeordnet sind, befinden sich vorzugsweise zusätzliche Ein- und Ausgänge. Dadurch ist es auf einfache Weise möglich, ein Membranchromatographiemodul oder eine Modulgruppe individuell mit dem jeweils passenden Puffermedium zu beschicken.

Im Hinblick auf einen Bind/Elute-Betrieb (B/E) der erfindungsgemäßen Einweg-Vorrichtung ist es sinnvoll, wenigstens einen Einweg-Leitfähigkeitssensor und/oder einen pH-Sensor und/oder einen Einweg-UV-Sensor vor einem Eingang und/oder hinter einem Ausgang eines Membranchromatographiemoduls oder einer Gruppe von zusammengeschalteten Membranchromatographiemodulen anzuordnen. Eine Anordnung der Sensorik sowohl vor als auch hinter einem Membranchromatographiemodul oder einer Gruppe von Modulen erlaubt es, Eingangs- und Ausgangswerte der gemessenen Parameter miteinander zu vergleichen und so z. B. einen Membrandurchbruch zu erkennen. Bei Verwendung von aufwendigerer Sensorik oder Spektrometern (Raman, FT-IR, UV, Fluoreszenz) kann die Zusammensetzung des Stoffgemischs vor dem Eingang und/oder nach dem Ausgang eines Membranchromatographiemoduls oder einer Gruppe von Membranchromatographiemodulen analysiert werden.

Ferner kann im Hinblick auf eine parameterabhängige Steuerung des Betriebs der erfindungsgemäßen Einweg-Vorrichtung wenigstens ein Einweg-Drucksensor und/oder ein Einweg-Flusssensor in einer der Leitungen des Leitungssystems angeordnet sein. Beispielsweise kann in einem Vorversuch in einem kleinen Maßstab eine optimale Flussrate ermittelt werden. Im eigentlichen Betrieb der Einweg-Vorrichtung kann dann eine Steuerung bzw. Regelung mit der optimalen Flussrate als Sollwert mithilfe der Messwerte der Sensoren erfolgen. Außerdem können Drucksensoren dazu dienen, einen Überdruck im System zu erkennen, sodass sofort eine Notabschaltung initiiert werden kann. Falls die erfindungsgemäße Einweg-Vorrichtung in einem kontinuierlich geführten Verfahren verwendet wird, bei dem ein weiterer Prozessschritt nach bzw. vor der Chromatographie erfolgt, ist es wichtig, die Flussraten zu kennen und ggf. auf geeignete Werte einzustellen. So kann etwa der Volumendurchsatz an vor- bzw. nachgelagerte Schritte angepasst werden.

Eine besonders vorteilhafte Ausführungsform der erfindungsgemäßen Einweg-Vorrichtung ergibt sich dadurch, dass der bzw. die Sensoren mit der Steuereinheit verbunden sind, die auch die automatisierten Ventile steuert. Mit einem solchen Aufbau ist eine automatisierte Steuerung der Einweg-Vorrichtung in Abhängigkeit von den gemessenen Betriebsparametern ohne manuelles Eingreifen möglich. Die automatisierte Steuerung der Ventile ermöglicht es auch, mehrere Prozesse oder Teilprozesse gleichzeitig durchzuführen, indem die Ventile so geschaltet werden, dass die Leitungen getrennte, voneinander unabhängige Leitungszweige mit zugehörigen Membranchromatographiemodulen bilden.

Wie bereits angedeutet, kann die erfindungsgemäße Einweg-Vorrichtung im aufgebauten Zustand eine verschlossene und vorsterilisierte Einheit bilden, die als Ganzes gelagert und transportiert werden kann. Dadurch ist es möglich, die Einweg-Vorrichtung mit Membranchromatographiemodulen auszuliefern, die bereits in Puffermedium äquilibriert sind. Dies erspart dem Anwender die Durchführung zusätzlicher Prozessschritte und verhindert mögliche Fehler auf Seiten des Anwenders. Die Module können auch ein Lagermedium enthalten, insbesondere Ethanol. Dadurch ist das Extractable-and-Leachable-Niveau gesenkt, da diese im Ethanol bereits vor-extrahiert sind. Es ist auch möglich, vor der Lagerung in Ethanol die Module bereits zu spülen und dadurch das Extractable-and-Leachable-Niveau zu senken. Eine Spülung vor der Auslieferung ermöglicht es zudem, einen Integritätstest schon beim Hersteller durchzuführen. Auch ein gegebenenfalls in den Modulen enthaltenes Medium zur Stabilisierung der Membranen, insbesondere Glycerin, ist bei der Auslieferung der Einweg-Vorrichtung dann bereits ausgespült. Somit geht das Befüllen dem Spülschritt voraus.

Im Hinblick auf die Entleerung und Entlüftung der in der erfindungsgemäßen Einweg-Vorrichtung eingesetzten Membranchromatographiemodule ist es wünschenswert, dass die Membranchromatographiemodule in ihrer Gebrauchsstellung aufrecht stehen, was z. B. durch eine starre Halterung der Einweg-Vorrichtung ermöglicht werden kann. Bei aufrechter Position aller Membranchromatographiemodulen der Vorrichtung kann optional ein zentraler Luftfilter für die Entlüftung der Gesamteinheit der Membranchromatographiemodule vorgesehen werden. Das bedeutet, dass die Entlüftung aller Membranchromatographiemodule an einer einzigen Stelle durchgeführt werden kann. Außerdem ist es bei aufrechter Position aller Membranchromatographiemodule möglich, diese in ihrer Gesamtheit an einer tiefsten Stelle zu entleeren. An dieser Stelle kann eine zentrale Auffangeinrichtung für die Entleerung angeordnet werden.

Gemäß der Erfindung ist eine Deckeleinrichtung und/oder eine Bodeneinrichtung vorgesehen, die an der Oberseite bzw. an der Unterseite einer Mehrzahl von Membranchromatographiemodulen angebracht ist. Die Deckeleinrichtung und/oder Bodeneinrichtung hat gemäß der Erfindung eine Doppelfunktion. Zum einen hält sie die Membranchromatographiemodule in einem vorgegebenen Raster in Position. Zum anderen ist in der Deckeleinrichtung und/oder eine Bodeneinrichtung wenigstens ein Teil des Leitungssystems der Einweg-Vorrichtung gebildet, mit Verbindungsleitungen zwischen den Membranchromatographiemodulen. Dadurch wird der Platzbedarf der Einweg-Vorrichtung noch weiter reduziert, da insoweit auf separate Schlauch- oder Rohrleitungen verzichtet werden kann.

Gemäß der Erfindung weist die Deckeleinrichtung und/oder die Bodeneinrichtung einzelne, fest miteinander verbundene Segmente auf, die jeweils einem Membranchromatographiemodul zugeordnet sind.

Darüber hinaus kann die Deckeleinrichtung und/oder die Bodeneinrichtung, insbesondere deren Segmente, individuell vorkonfigurierte oder vorkonfigurierbare Anschlüsse und Leitungsstücke aufweisen. So lässt sich nach Art eines Baukastens aus einzelnen Segmenten ein individuell konfiguriertes Leitungssystem erstellen, bei der jedes Membranchromatographiemodul in gewünschter Weise in den bzw. die Strömungspfade eingebunden ist. Bei entsprechender Konfiguration sind keine zusätzliche(n)/externe(n) Fluidverteilung oder Ventile erforderlich. Vielmehr können alle benötigten Medien direkt angeschlossen und über die automatisierten Ventile direkt von der Steuereinheit gesteuert werden. Dadurch können ansonsten erforderliche zusätzliche Schläuche, Ventile etc. wegfallen. Durch eine vorherige Festlegung zugeordneter Ports für jedes Prozessmedium wird das Verwechslungsrisiko erheblich reduziert.

An einem oder mehreren ansonsten nicht genutzter Anschlüsse der Deckeleinrichtung oder der Bodeneinrichtung können ein oder mehrere Sensoren oder spektroskopische Einrichtungen direkt angebracht werden. Hierfür sind keine zusätzlichen Leitungen erforderlich, sodass sich ein sehr kompakter Aufbau ergibt.

Die Erfindung schafft auch ein Verfahren zur Separation oder Aufreinigung eines großen Volumens eines Stoffgemischs unter Verwendung einer erfindungsgemäßen Einweg-Vorrichtung, wobei die Einweg-Vorrichtung mehrere automatisierte Ventile und Sensoren, insbesondere wenigstens einen Einweg-Leitfähigkeitssensor, einen Einweg-UV-Sensor, einen Einweg-Drucksensor oder einen Einweg-Flusssensor, umfasst, die mit einer Steuereinheit verbunden sind. Das erfindungsgemäße Verfahren sieht vor, dass die automatisierten Ventile basierend auf einer Auswertung der von den Sensoren gemessenen Betriebsparametern gesteuert werden. Die automatisierte Steuerung der Ventile ist besonders im Bind/Elute-Modus aufgrund der wechselnden Prozessschritte vorteilhaft.

Für die von den Sensoren gemessenen Betriebsparameter können vorab Signalschwellenwerte definiert werden, sodass in Abhängigkeit von einem Über- bzw. Unterschreiten der Signalschwellenwerte vorgegebene Prozessschritte durchgeführt werden, z. B. eine automatisch durchgeführte Ventilschaltsequenz zur Sammlung ausgewählter und getrennter Fraktionen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht einer nicht-erfindungsgemäßen Einweg-Vorrichtung nach einer ersten Ausführungsform;
- Figur 2 eine schematische Darstellung einer nicht-erfindungsgemäßen Einweg-Vorrichtung nach einer zweiten Ausführungsform ohne Halterung;
- Figur 3 eine schematische Anordnung von Komponenten einer nicht-erfindungsgemäßen Einweg-Vorrichtung;
- Figur 4 eine perspektivische Ansicht einer erfindungsgemäßen Einweg-Vorrichtung nach einer dritten Ausführungsform mit einer Deckel- und einer Bodeneinrichtung;
- Figur 5 die Einweg-Vorrichtung aus Figur 4 in einer ersten Betriebsart;
- Figur 6 die Einweg-Vorrichtung aus Figur 4 in einer zweiten Betriebsart;
- Figur 7 die Einweg-Vorrichtung aus Figur 4 in einer dritten Betriebsart;
- Figur 8 die Einweg-Vorrichtung aus Figur 4 in einer vierten Betriebsart;
- Figur 8a den Strömungsweg durch die Deckeleinrichtung der Einweg-Vorrichtung aus Figur 4 in der vierten Betriebsart;
- Figur 9 die Einweg-Vorrichtung aus Figur 4 in einer fünften Betriebsart;
- Figur 9a den Strömungsweg durch die Deckeleinrichtung der Einweg-Vorrichtung aus Figur 4 in der fünften Betriebsart.

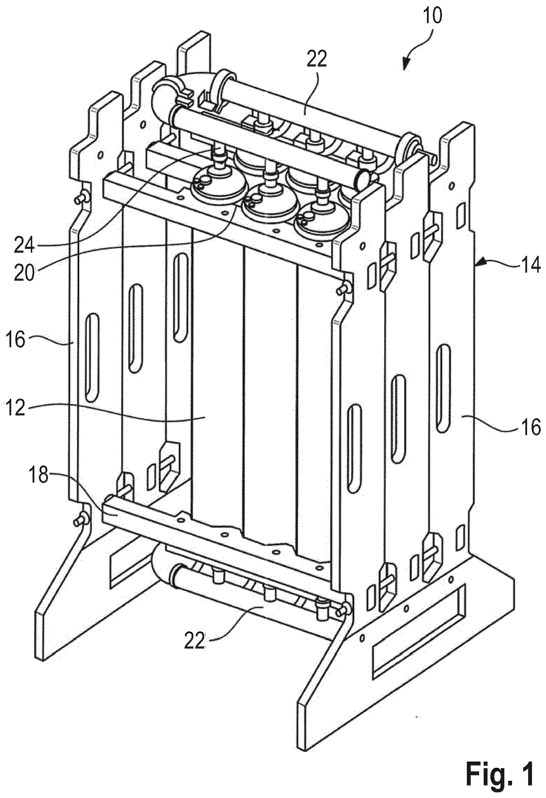

In Figur 1 ist eine Einweg-Vorrichtung 10 zur Separation oder Aufreinigung eines großen Volumens eines Stoffgemischs dargestellt, die nachfolgend genauer beschrieben wird. Im Anschluss werden mögliche Modifikationen der Vorrichtung erläutert, insbesondere im Hinblick auf die bevorzugte Ausführung als Membranchromatographievorrichtung.

Die Einweg-Vorrichtung 10 umfasst eine Mehrzahl von Membranchromatographiemodulen 12. Die Membranchromatographiemodule 12 werden von einer starren Halterung 14 (Rack) in einer vorgegebenen Anordnung (Raster) in aufrechter Position gehalten. In dem in Figur 1 dargestellten Ausführungsbeispiel sind sechs Membranchromatographiemodule 12 stehend in einem 3 x 2 Raster angeordnet. Selbstverständlich sind auch andere Raster mit mehr oder weniger Membranchromatographiemodulen 12 möglich, wobei möglichst kompakte Anordnungen bevorzugt sind. Die Halterung 14 umfasst wenigstens zwei gegenüberliegende Seitenwände 16, die durch Querstreben 18 miteinander verbunden sind. An den Querstreben 18 sind Haltemittel 20 für die einzelnen Membranchromatographiemodule 12 vorgesehen. Die Haltemittel 20 sind mit elastischen Materialien versehen. Dadurch steht sowohl während des Transports als auch während des Betriebs der Einweg-Vorrichtung 10 eine Stoß- und Vibrationsdämpfung für die Membranchromatographiemodule 12 zur Verfügung.

Die Membranchromatographiemodule 12 sind vollständig oder zumindest großteils durch starre, druckstabile Rohrleitungen 22 miteinander verbunden. Die starren Rohrleitungen 22 gewährleisten ein gleichmäßiges Strömungsverhalten ohne Druckschwankungen. Der Verlauf der Rohrleitungen 22 ist bestimmt durch den vorgesehenen Betrieb der Einweg-Vorrichtung 10. In Figur 1 ist eine vollständige Parallelschaltung von sechs Membranchromatographiemodulen 12 gezeigt. Es kann aber auch eine teilweise Parallelschaltung bzw. eine vollständige oder teilweise Reihenschaltung der Membranchromatographiemodule 12 vorgesehen sein. Die Rohrleitungen 22 weisen die hierfür notwendigen Abzweigungen 24 zu den einzelnen Membranchromatographiemodule 12 auf. Soweit erforderlich sind die Rohrleitungen 22 an der Halterung 14 befestigt.

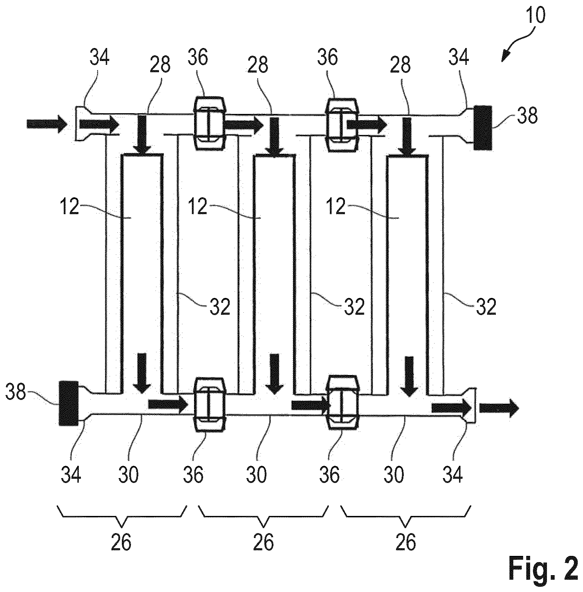

In Figur 2 ist schematisch eine weitere Ausführungsform der erfindungsgemäßen Einweg-Vorrichtung 10 dargestellt, jedoch ohne die zugehörige Halterung 14. Die Besonderheit bei dieser Ausführungsform ist die Verrohrung der Membranchromatographiemodule 12. Anstelle der Rohrleitungen 22 und Abzweigungen 24 sind hier starre, vereinheitlichte Zu- und Ablaufeinheiten 26 aus Kunststoff vorgesehen. Für jedes Membranchromatographiemodul 12 ist eine eigene Zu- und Ablaufeinheit 26 mit einer Zulaufeinrichtung 28 und einer Ablaufeinrichtung 30 vorgesehen, die auf die stirnseitigen Zulauf- und Ablaufanschlüsse des jeweiligen Membranchromatographiemoduls 12 abgestimmt sind. Die Zulaufeinrichtung 28 und die Ablaufeinrichtung 30 sind entweder vollständig identisch oder wenigstens großteils identisch aufgebaut.

Zwischen der Zulaufeinrichtung 28 und der Ablaufeinrichtung 30 erstrecken sich Verbindungsstreben oder eine Gehäusewand 32, um die beiden Einrichtungen miteinander zu verbinden. In letzterem Fall sind die Membranchromatographiemodule 12 von der vollständig umlaufenden Gehäusewand 32 umgeben und dadurch gegen äußere Einwirkungen geschützt.

Sowohl die Zulaufeinrichtung 28 als auch die Ablaufeinrichtung 30 weisen jeweils zwei entgegengesetzte Außenanschlüsse 34 auf. Durch geeignete Verbindungsbauteile 36, wie etwa TRI-Clamp-Verbindungen, können mehrere Zu- und Ablaufeinheiten 26 miteinander verbunden werden. Dabei wird ein zulaufseitiger Außenanschluss 34 eines Membranchromatographiemoduls 12 mit einem zulaufseitigen Außenanschluss 34 eines benachbarten Membranchromatographiemoduls 12 verbunden. Ebenso wird ein ablaufseitiger Außenanschluss 34 des einen Membranchromatographiemoduls 12 mit einem ablaufseitigen Außenanschluss 34 des benachbarten Membranchromatographiemoduls 12 verbunden. In jedem Fall sind zwischen den Verbindungen Dichtungen vorzusehen. Auf diese Weise können beliebig viele Membranchromatographiemodule 12 für eine parallele Anströmung zusammengefügt werden. Die nicht benötigten Außenanschlüsse 34 werden durch geeignete Verschlüsse 38 abgedichtet. Diese Verschlüsse 38 oder auch Blindkappen werden ebenfalls mittels geeigneter Verbindungsbauteile 36 angebracht.

Die Zu- und Ablaufeinheit 26 kann einstückig, als Bausatz oder als vorgefertigte Einheit ausgebildet sein. Insbesondere können mehrere Zulaufeinrichtungen 28 und/oder Ablaufeinrichtungen 30 einstückig ausgebildet oder vormontiert sein, bevor sie an den Membranchromatographiemodulen 12 angebracht werden.

Die Membranchromatographiemodule 12 sind so ausgerichtet, dass sie von unten nach oben durchströmt werden, was für gleichmäßige hydrostatische Bedingungen sorgt. Es ist aber auch ein umgekehrter Betrieb möglich, d. h. eine Durchströmung von oben nach unten.

Zwischen den Membranchromatographiemodulen 12 können Sperrventile vorgesehen sein, sodass Verbindungen zwischen bestimmten Membranchromatographiemodulen 12 gezielt gesperrt werden können. Dies ermöglicht eine gezielte sterile Entlüftung eines einzelnen Membranchromatographiemoduls 12 oder einer Gruppe von zusammengeschalteten Membranchromatographiemodulen.

Die Sperrventile können auch für einen Integritätstest genutzt werden, bei dem die Adsorbermembranen benetzt werden, bevor mit einem Prüfgas etwaige unerwünschte Bypässe detektiert werden. Der Integritätstest wird bei den Membranchromatographiemodulen 12 im Wesentlichen genauso durchgeführt wie bei Filtercapsulen. Mittels der Sperrventile und einer gemeinsamen Entlüftungsleitung mit einem Steril-Luftfilter ist es auch möglich, eine Gruppe von Modulen 12 gemeinsam zu testen. Der Integritätstest kann bereits vor der Auslieferung der Einweg-Vorrichtung 10 durchgeführt werden, sodass dem Anwender dieser Aufwand erspart bleibt.

Die wichtigsten, vorzugsweise alle zur Bedienung der Einweg-Vorrichtung 10 benötigten Ventile befinden sich auf derselben Seite der Einweg-Vorrichtung 10, was eine verbesserte Übersicht und vereinfachte Bedienbarkeit schafft.

Die Ventile, oder zumindest ein Teil davon, sowie weitere Einrichtungen der Einweg-Vorrichtung 10 können automatisiert sein, d. h. eine programmierbare Steuereinheit (nicht gezeigt) übernimmt die Steuerung dieser Komponenten während eines Prozesses bzw. Prozessschritts.

Im Folgenden werden Maßnahmen zur Optimierung der Einweg-Vorrichtung 10 beschrieben. Die Membranchromatographiemodule 12 sind vorzugsweise mehrlagig gewickelte Wickelmodule mit einer Betthöhe von vorzugsweise 1 bis 30 mm. Für eine gleichmäßige Durchströmung ist es zweckdienlich, bei den Modulen Membranen aus derselben Charge zu verwenden.

Die Verbindungen der Membranchromatographiemodule 12 sind für einen gewünschten Separations- oder Aufreinigungsprozess vorkonfiguriert. So können durch entsprechend vorkonfigurierte Leitungsverläufe unterschiedliche Betriebsweisen realisiert werden. Insbesondere können die Membranchromatographiemodule 12 parallel angeströmt werden. Es ist auch möglich, eine oder mehrere Gruppen (Bänke, Blöcke) von Membranchromatographiemodulen 12 parallel anzuströmen, während die Module 12 innerhalb einer Gruppe sequentiell angeströmt werden. Aufgrund des vorgegebenen Rasters können die flexiblen Schlauch- bzw. die starren Rohrverbindungsleitungen sehr kurz ausfallen, sodass der Material- und Montageaufwand, aber auch Toträume, d. h. funktionslose Bereiche, minimiert sind.

Die Membranchromatographiemodule 12 der Einweg-Vorrichtung 10 sind alle durch eine gemeinsame Eingangsleitung und eine gemeinsame Ausgangsleitung, ggf. mit Verzweigungen für einen Parallelbetrieb der Module, miteinander verbunden. Die Leitungen sind totraumoptimiert, indem sie einen auf maximale Strömungsgeschwindigkeit abgestimmten maximalen Durchmesser und eine zur Verteilung bzw. Zusammenführung minimal benötigte Länge aufweisen. Auch im Hinblick darauf, eine Rückvermischung zu verhindern, sind die Leitungsdurchmesser möglichst klein gehalten.

Außerdem ist für die gesamte Einweg-Vorrichtung 10 wenigstens eine gemeinsame, totraumoptimierte Abführleitung vorgesehen, durch die zu entsorgendes Medium abgeführt werden kann. Bevorzugt sind jedoch eine Deckel- und eine Bodeneinrichtung für die Membranchromatographiemodule 12 mit mehreren Ein- und Ausgängen, die später noch genauer beschrieben werden

Dank der kompakten, totraumoptimierten Bauweise der Einweg-Vorrichtung 10 wird das benötigte Volumen der Prozessmedien auf ein Minimum reduziert, so dass einerseits Kosten und der Aufwand für anschließende Aufbereitungsschritte reduziert werden, welche aufgrund des Einsatzes von verschiedenen Prozessmedien notwendig sind.

Die in der Einweg-Vorrichtung 10 eingesetzten Membranchromatographiemodule 12 können unterschiedlicher Art sein. Dies betrifft insbesondere die in den Modulen 12 verwendeten Membranadsorbertypen.

In eine Eingangsleitung, die zu einem oder zu mehreren Membranchromatographiemodulen 12 führt, kann ein Vorfilter, z. B. in Form einer Filtercapsule, integriert sein. Die effektive Filterfläche des Vorfilters ist signifikant kleiner als die des bzw. der zugeordneten Membranchromatographiemodule 12.

Die Einweg-Vorrichtung 10 verfügt über wenigstens einen, vorzugsweise wenigstens zwei Ausgänge und vorzugsweise über wenigstens zwei Eingänge. Somit können die Module 12 mit wenigstens zwei, ggf. sogar mit drei oder mehr unterschiedlichen Medien betrieben werden, die alternierend oder getrennt zu-/abgeführt werden (Äquilibrieren/Waschen, Beladen und Elution).

Die Ein- bzw. Ausgänge sind jeweils mit Single-Use-Ventilen versehen (die als Mehrwegeventile ausgeführt sein können), ebenso wie die gemeinsame Eingangsleitung und die gemeinsame Ausgangsleitung sowie ggf. weitere Verbindungsleitungen. Die Ventile sind vorzugsweise automatisiert, d. h. die Ventile sind mit der Steuereinheit der Einweg-Vorrichtung 10 verbunden, welche die entsprechenden Ein- und Ausgänge bzw. Leitungen freigeben und sperren kann. Dank der automatisierten Ventile lassen sich ohne Umbau der Einweg-Vorrichtung 10 unterschiedliche Betriebsweisen realisieren.

Dank der flexiblen Verschaltung kann auch die Kapazität der Adsorber in den Membranchromatographiemodulen besser ausgenutzt werden. In einer seriellen Verschaltung kann bei Überbeladung ein nachgeschaltetes zweites Membranchromatographiemodul 12 den Durchbruch eines vorgeschalteten ersten Moduls 12 aufnehmen. Ist das erste Modul 12 voll, wird dieses eluiert/gereinigt. Zwischenzeitlich kann optional das zweite Modul 12 weiter beladen werden. Das erste Modul 12 wird dann nach Regeneration nachgeschaltet.

Durch zusätzliche Ein- und Ausgänge an den Unterbrechungsstellen in den Verbindungsleitungen - also dort, wo Ventile angeordnet sind - ist eine individuelle Beschickung mit einem für das jeweilige Membranchromatographiemodul 12 bzw. für die jeweilige Modulgruppe erforderliche Puffermedium möglich. Dies ist besonders relevant bei einer Verschaltung von aufeinanderfolgenden Membranchromatographiemodulen 12 mit unterschiedlichen Membranadsorbertypen.

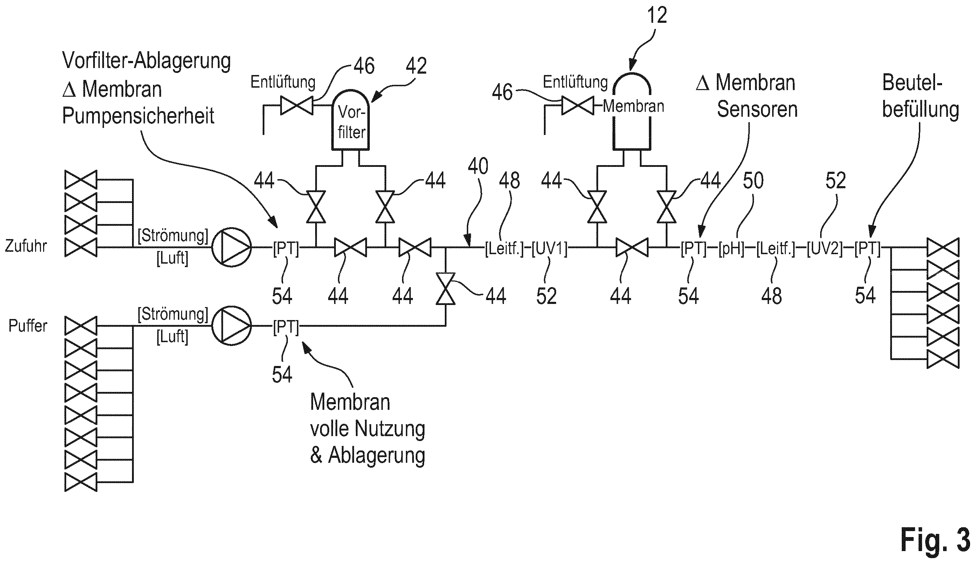

Eine beispielhafte Anordnung von Komponenten einer erfindungsgemäßen Einweg-Vorrichtung 10 ist in Figur 3 gezeigt. Ein zu separierendes oder aufzureinigendes Stoffgemisch und ein oder mehrere Puffer können über eine Zufuhrleitung 40 einem oder mehreren Membranchromatographiemodulen 12 zugeführt werden. Die Membranchromatographiemodule 12 können noch weitere Eingänge haben z. B. zur separaten Zufuhr eines Spülmediums.

Vor der Zufuhr zu den Membranchromatographiemodulen 12 durchströmt das Stoffgemisch einen Vorfilter 42. Nach Durchlaufen der Membranchromatographiemodule 12 werden das Medium bzw. die Puffer in Beutel gefüllt.

Mittels mehrerer Ventile 44 lassen sich in Abhängigkeit von der jeweiligen Betriebsart der Einweg-Vorrichtung 10 (Spülen, Flow-Through, Bind/Elute, Integritätstest, Waschen, Sanitisieren, Reinigen) unterschiedliche Strömungswege einstellen. Der Vorfilter 42 und die Membranchromatographiemodule 12 können über ein Entlüftungsventil 46 entlüftet werden.

Insbesondere im Hinblick auf den Betrieb der Einweg-Vorrichtung 10 im Bind/Elute-Modus ist wenigstens ein Einweg-Leitfähigkeitssensor 48 und/oder ein Einweg-pH-Sensor 50 und/oder ein Einweg-UV-Sensor 52 vorgesehen. Der bzw. die Sensoren 48, 50, 52 sind hinter den Ausgängen der Membranchromatographiemodule 12 bzw. des Vorfilters 42 der Einweg-Vorrichtung 10 angeordnet. Im Falle einer Reihenschaltung von Membranchromatographiemodulen 12 ist der bzw. sind die Sensoren 48, 50, 52 nach dem letzten Prozessschritt angeordnet, optional auch vor dem ersten Prozessschritt und/oder zwischen einzelnen Prozessschritten.

Des Weiteren sind im Leitungssystem an kritischen Stellen Drucksensoren 54 und/oder Flusssensoren in den Leitungen angeordnet, die ebenso wie der bzw. die Einweg-Leitfähigkeitssensoren 48, Einweg-pH-Sensoren 50 und/oder Einweg-UV-Sensor(en) 52 mit der Steuereinheit der Einweg-Vorrichtung 10 verbunden sind.

Somit ist eine fortwährende Messung von Betriebsparametern und eine von diesen Parametern abhängige automatisierte Steuerung der Einweg-Vorrichtung 10 möglich.

Die Einweg-Vorrichtung 10 mit den Membranchromatographiemodulen 12 ist im Flow-Through-Modus (FT), jedoch besonders bevorzugt im Bind/Elute-Modus (B/E) betreibbar. Im B/E-Modus sind automatisierte Ventilschaltvorgänge und eine auf Sensor-Messwerten basierende automatisierte Regelung aufgrund der wechselnden Prozessschritte besonders vorteilhaft.

Über die Definition bestimmter Signalschwellenwerte der Sensoren 48, 50, 52 lässt sich die Ventilschaltsequenz zur Sammlung ausgewählter und getrennter Fraktionen im FT- oder B/E-Modus 12 automatisieren (Autosampling).

Mit der Einweg-Vorrichtung 10 sind auch mehrere Prozesse oder Teilprozesse gleichzeitig durchführbar. Für solche Fälle ist vorgesehen, dass die Leitungen wenigstens zwei getrennte, voneinander unabhängige Leitungszweige mit zugehörigen Membranchromatographiemodulen 12 bilden.

Dank der in die Leitungen integrierten Ventile, lassen sich solche unabhängigen Leitungszweige flexibel erstellen. In Verbindung mit den zusätzlichen Ein- und Ausgängen und dort angeordneten pH- und/oder Leitfähigkeits- und/oder UV-Sensoren ist eine quasi-kontinuierliche Betriebsweise durch Betreiben von mindestens zwei parallelen Systemen oder Systemgruppen, eines in Belade-, das jeweils andere in Elutionsbetriebsweise, möglich. Durch zusätzliche serielle Verschaltung können mehrere Aufreiningungsschritte in kontinuierlichem Betrieb mit Hilfe vorsterilisierter, vorassemblierter, steril oder unsteril installierbarer Systeme angeordnet werden (nahtloses Beladen nach erfolgter Elution).

Die gesamte Einweg-Vorrichtung 10 ist im aufgebauten Zustand verschlossen und vorsterilisiert transportierbar. Dies bietet die Möglichkeit, die Membranchromatographiemodule 12 in Puffermedium äquilibriert bzw. mit Produktlösung beladen auszuliefern. Auch ein Integritätstest kann bereits vor der Auslieferung durchgeführt werden. Dadurch erspart sich der Anwender langwierige Vorbereitungsschritte.

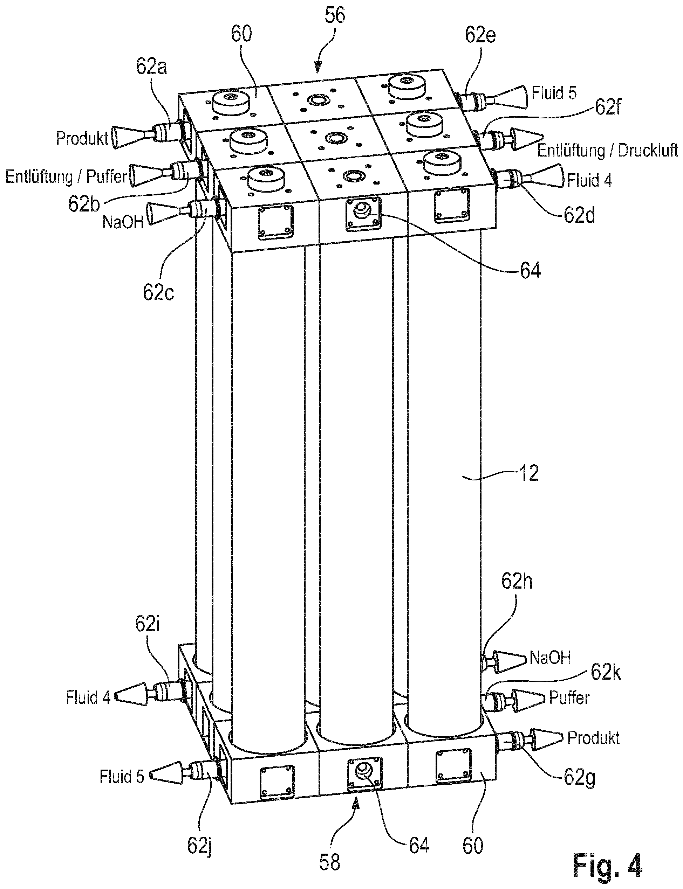

In den Figuren 4 bis 9 sind mehrere Membranchromatographiemodule 12 einer Einweg-Vorrichtung 10 in verschiedenen Betriebsarten gezeigt. Eine Besonderheit sind hier die starre Einweg-Deckeleinrichtung 56 und die starre Einweg-Bodeneinrichtung 58. Diese Einrichtungen 56, 58 ersetzen die Halterung 14 und halten alleine die Membranchromatographiemodule 12 in der vorgegebenen Anordnung (Raster) in Position. Die Deckeleinrichtung 56 und die Bodeneinrichtung 58 können aus einem Stück gebildet oder aus einzelnen, fest miteinander verbundenen Elementen zusammengesetzt sein. In jedem Fall sind die Deckeleinrichtung 56 und die Bodeneinrichtung 58 in einzelne Segmente 60 unterteilt, die jeweils einem Membranchromatographiemodul 12 zugeordnet sind.

Die Deckeleinrichtung 56 und die Bodeneinrichtung 58, genauer gesagt jedes Segment 60, umfasst Anschlüsse 62 und Leitungsstücke 64, die individuell vorkonfiguriert oder vorkonfigurierbar sind. Die Anschlüsse 62 und Leitungsstücke 64 eines Segments 60 stehen mit Eingängen bzw. Ausgängen des zugehörigen Membranchromatographiemoduls 12 und den Anschlüssen angrenzender Segmente 60 in Strömungsverbindung oder eben nicht (je nach Konfiguration). Die Anzahl der Anschlüsse 62 je Segment 60 ist variabel, und die Anschlüsse 62 können grundsätzlich beliebig belegt bzw. gesperrt werden. Die Leitungsstücke 64 können auch segmentübergreifend angeordnet sein.

An der Deckeleinrichtung 56 und/oder an der Bodeneinrichtung 58, genauer gesagt an ansonsten nicht genutzten Anschlüssen 62, lassen sich Sensoren 48, 50, 52, 52, 54 und/oder spektroskopische Einrichtungen anbringen, insbesondere anstöpseln.

Mit der Deckeleinrichtung 56 und der Bodeneinrichtung 58 ist es durch entsprechende Konfiguration möglich, bezüglich der Eingänge eines oder einer Gruppe von Membranchromatographiemodulen 12 für das Stoffgemisch (Produkteingang) und für den Elutionspuffer (Puffereingang) eine Fluid-Gleichverteilung zu gewährleisten, d. h. die jeweiligen Strömungswege bis zum entsprechenden Ausgang sind gleich lang. Dadurch werden im Spektrum schmale, klar erkennbare Peaks erreicht (hohe Auflösung).

Wie bereits erwähnt kann die Einweg-Vorrichtung 10 im Flow-Through-Modus (FT) oder im Bind/Elute-Modus (B/E) betrieben werden. Im Folgenden wird der Betrieb der Einweg-Vorrichtung 10 mit der Deckeleinrichtung 56 und der Bodeneinrichtung 58 im B/E-Modus beschrieben.

Aus Figur 4 geht die Nutzung der einzelnen Anschlüsse 62a bis 62k der Segmente 60 für den Betrieb im B/E-Modus hervor:
Über den mit "Product" gekennzeichneten Eingangsanschluss 62a wird ein konditionierter Produktstrom (pH-Wert, Leitfähigkeit etc. durch Puffer im Vorfeld angepasst).

Der mit "Venting/Puffer" bezeichnete Eingangsanschluss 62b steht im FT-Modus zur Belüftung der Membranchromatographiemodule 12 zur Verfügung. Im B/E-Modus dient er zur Zufuhr eines Konditionierungspuffers, beispielsweise zur Ladungsanpassung für Ionenaustauschchromatographie o.ä.).

Über den Eingangsanschluss 62c mit der Bezeichnung "NaOH" wird Natronlauge zur Reinigung der Adsorbermembranen der Membranchromatographiemodule 12 zugeführt.

Der mit "Fluid 4" bezeichnete Eingangsanschluss 62d dient zur Zufuhr eines Elutionspuffers.

Der mit "Fluid 5" bezeichnete Eingangsanschluss 62e ermöglicht die Zufuhr eines Äquilibrierungspuffers und/oder eines Waschpuffers.

Über den als "Venting / pressurized air" bezeichneten Ausgangsanschluss 62f kann im B/E-Modus entlüftet werden.

Über den mit "Product" bezeichneten Ausgangsanschluss 62g wird der zugeführte Produktstrom abgeführt.

Die mit "NaOH", "Fluid 4", "Fluid 5" und "Puffer" bezeichneten Ausgangsanschlüsse 62h, 62i, 62j, 62k dienen zur Abfuhr der entsprechenden Medien. Zumindest die Medien NaOH, Fluid 5 und Puffer könnten auch alle auf einen der genannten Ausgangsanschlüsse 62h, 62j, 62k geleitet werden, sodass ein gemeinsamer Abfallbeutel (waste bag) für die Entsorgung genutzt werden kann.

Typischerweise finden im B/E-Betrieb folgende Prozessschritte statt:
1. Befüllen und Entlüften, üblicherweise mit einem Puffer, um die Membranchromatographiemodule 12 mit Flüssigkeit zu benetzen.
2. Optionaler Integritätstest.
3. Sanitisierung, typischerweise mit einer Lauge, um die Keimbelastung (Bioburden) vor der ersten Verwendung zu reduzieren.
4a. Konditionieren (optional) mit einem Puffer, insbesondere einem Hochsalzpuffer, um alle Liganden und Bindestellen auf das gleiche Niveau zu bringen (stationäre Phase).
4b. Alternativ zu 4a: Spülen mit Puffer, um Lauge zu entfernen.
5. Äquilibrieren mit einem (ggf. anderen) Puffer zur Einstellung des Säulengleichgewichts, sodass die Liganden binden können.
6. Beladen mit Zielmolekülen.
7. Wenigstens ein Waschschritt, vorzugsweise mit dem Äquilibrierungspuffer, um nicht gebundene Proteinrückstände bzw. gebundene Verunreinigungen zu entfernen.
8. Elution mit einem Elutionspuffer, um das Protein aus den Säulen herauszulösen.
9. Waschen mit einem Puffer, um Reste und Verunreinigungen zu entfernen.
10a. Optionale Reinigung mit Säure oder Base, um Rückstände und Verunreinigungen von der Matrix entfernen. Wiederverwendung der Vorrichtung 10 nach Konditionieren oder Waschen der Membranchromatographiemodule 12 im selben Batch (intra-batch re-use).
10b. Alternativ zu 10a: Membranchromatographiemodule 12 in einer Lagerlösung (z.B. Ethanol) konservieren. Wiederverwendung der Vorrichtung 10 nach Sanitisieren oder Konditionieren oder Waschen der Membranchromatographiemodule 12 im selben Batch (intra-batch re-use).
10c. Alternativ zu 10a und 10b: Membranchromatographiemodule 12 verwerfen, keine Wiederverwendung.

Selbstverständlich kann dieser typische Prozess je nach Verfahren und Anforderungen variiert werden, insbesondere bezüglich der Reihenfolge der Schritte und der Anzahl der Zwischenschritte. Beispielsweise können mehrere Waschschritte erfolgen, und/oder der Elutionsschritt kann mit einem anderen Elutionspuffer wiederholt werden, etc.

Nachfolgend werden einige Details zur Verwendung der Deckeleinrichtung 56 und der Bodeneinrichtung 58 bei bestimmten Prozessschritten im B/E-Modus beschrieben.

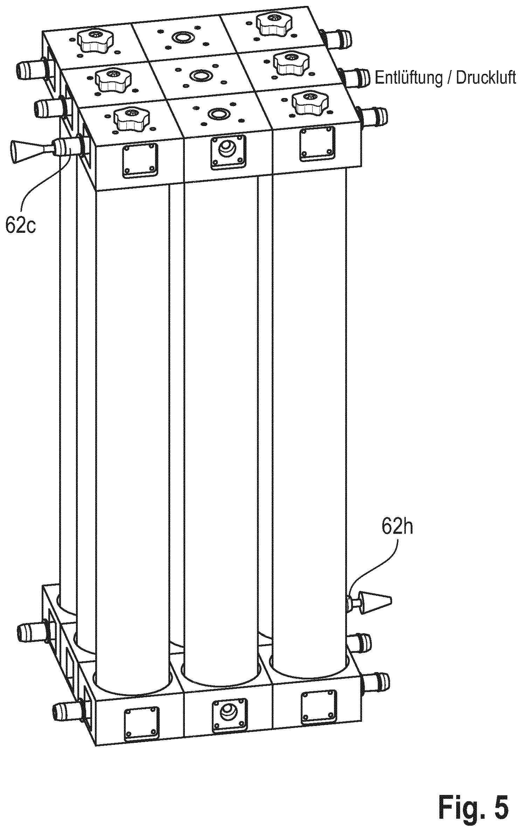

Wie in Figur 5 gezeigt, wird für eine Sanitisierung der Membranchromatographiemodule 12 (ein spezieller Reinigungs- und Desinfektionsvorgang zur signifikanten Reduzierung der Keimzahl) das System (Verbund der Membranchromatographiemodule 12) über den mit NaOH bezeichneten Eingangsanschluss 62c der Deckeleinrichtung 56 mit Natronlauge befüllt. Dabei bleibt der mit NaOH bezeichnete Ausgangsanschluss 62h der Bodeneinrichtung 58 zunächst geschlossen, um das System über den mit "Venting / pressurized air" bezeichneten Ausgangsanschluss 62f entlüften zu können. Anschließend wird das System im Durchströmverfahren sanitisiert, wobei der NaOH-Ausgangsanschluss 62h geöffnet ist. Nach Ablauf einer vorgegebenen Kontaktzeit wird die Natronlauge aus dem System über den Ausgangsanschluss 62f herausgedrückt, während der Eingangsanschluss 62c verschlossen ist. Am Ende werden sowohl der Eingangsanschluss 62c als auch der Ausgangsanschluss 62f wieder verschlossen und die Ventile 44 so eingestellt, dass die Membranchromatographiemodule 12 parallel geschaltet sind.

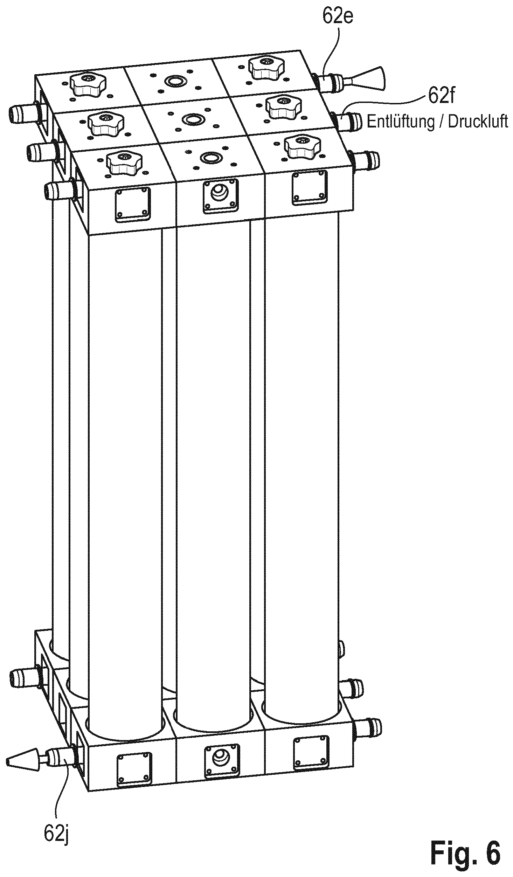

Vor der Sanitisierung wird das System üblicherweise noch mit einem Puffer gespült, einschließlich Entlüftung. Dieser optionale Schritt, der in Figur 6 gezeigt ist, dient zur Ladungseinstellung, die bei manchen lonenaustauschchromatographieverfahren erforderlich ist. Hierzu wird das System über den mit "Fluid 5" bezeichneten Eingangsanschluss 62e mit einem geeigneten Puffer befüllt. Der Ausgangsanschluss bleibt zunächst verschlossen, um das System über mit "Venting / pressurized air" bezeichneten Ausgangsanschluss 62f entlüften zu können. Anschließend kann das System optional im Durchströmverfahren konditioniert werden, wobei der Ausgangsanschluss 62j geöffnet ist. Nach Ablauf einer vorgegebenen Kontaktzeit werden sowohl der Eingangsanschluss 62e als auch der Ausgangsanschluss 62f wieder geschlossen und die Ventile 44 so eingestellt, dass die Membranchromatographiemodule 12 parallel geschaltet sind. Ein Herausdrücken des Puffers aus dem System ist in der Regel nicht erforderlich, falls der nachfolgende Äquilibrierungsschritt mit einem ähnlichen Puffer durchgeführt wird, der eine geringere Salzkonzentration aufweist (insbesondere CEX). Somit kann auf eine erneute Entlüftung verzichtet werden. Falls dennoch ein Herausdrücken des Puffers erforderlich sein sollte, ist entsprechend dem zuvor beschriebenen Sanitisierungsschritt zu verfahren.

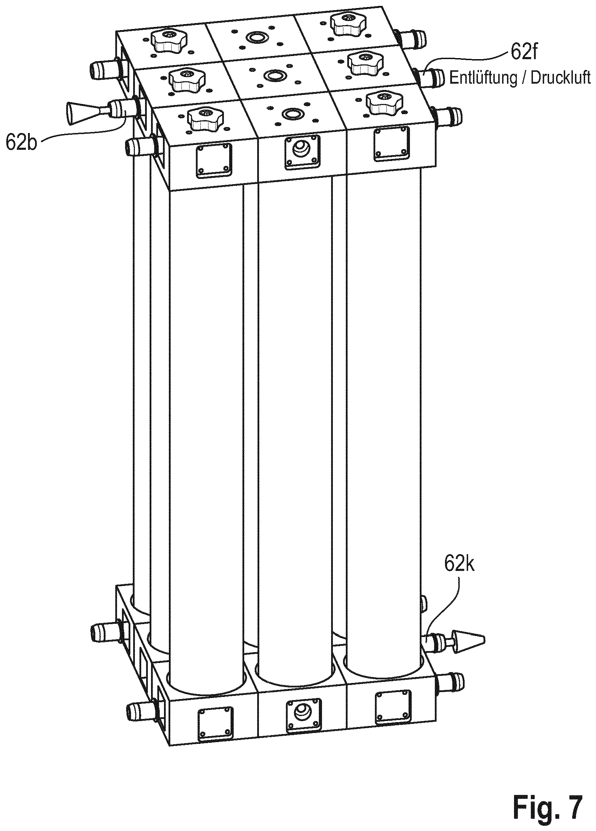

In Figur 7 ist die Äquilibrierung des Systems mit einem Puffer gezeigt. Das System wird über den mit "Venting/Puffer" bezeichneten Eingangsanschluss 62b im Durchströmverfahren mit einem geeigneten Puffer konditioniert, wobei der Ausgangsanschluss 62k geöffnet ist. Nach Ablauf einer vorgegebenen Kontaktzeit werden sowohl der Eingangsanschluss 62b als auch der Ausgangsanschluss 62k wieder geschlossen und die Ventile 44 so eingestellt, dass die Membranchromatographiemodule 12 parallel geschaltet sind. Ein Herausdrücken des Puffers aus dem System ist in der Regel nicht erforderlich. Somit kann auf eine erneute Entlüftung verzichtet werden. Falls dennoch ein Herausdrücken des Puffers erforderlich sein sollte, ist entsprechend dem zuvor beschriebenen Sanitisierungsschritt zu verfahren.

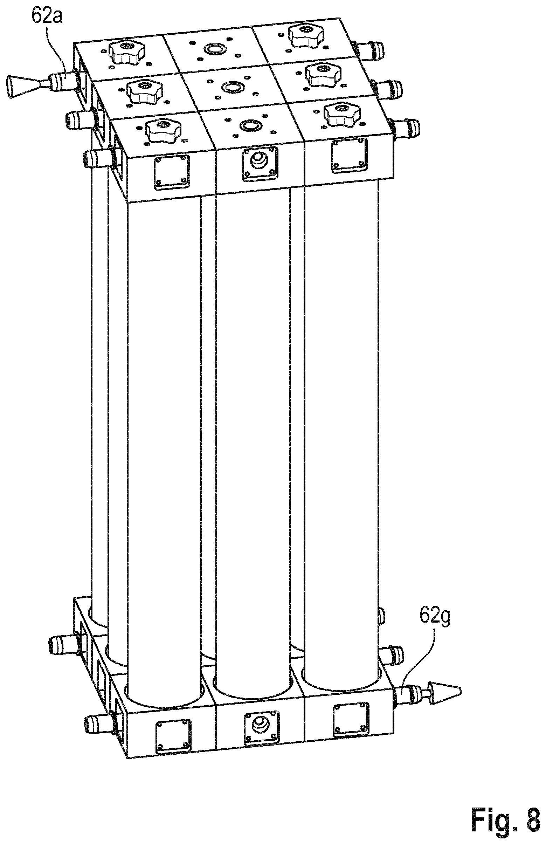

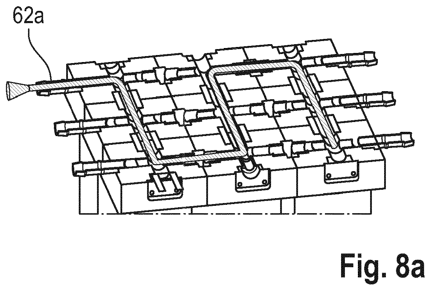

Figur 8 zeigt den Capture/Load-Schritt der Aufreinigung der Produktlösung. Für diesen Vorgang wird das System über den mit "Product" bezeichneten Eingangsanschluss 62a betrieben. Das System wird durchströmt und beladen bis zu einer vorher festgelegten maximalen Menge (Volumen), welche ausreichend geringer ist als die bekannte Durchbruchsmenge (üblich sind 70 % des 10 %-DBC Wertes (dynamische Bindungskapazität)). In dieser Zeit bleibt der Produkt-Ausgangsanschluss 62g geöffnet, und das sogenannte Flowthrough wird verworfen (alternativ würde im FT-Modus das Produkt im Flowthrough aufgefangen). Die Konzentration des Produkts kann optional durch die Sensoren, insbesondere die UV-Sensoren 52 und/oder Leitfähigkeitssensoren 48, direkt vor der Anströmung und direkt nach der Gruppe der durchströmten Membranchromatographiemodulen 12 ermittelt werden.

Sobald das vorher bestimmte Injektionsvolumen erreicht ist, schaltet die Steuereinheit der Einweg-Vorrichtung 10 auf den nächsten Prozessschritt um (Elution). Zuvor erfolgt noch wenigstens ein Waschschritt, um unspezifisch gebundenes Material vom Chromatographiebett zu waschen.

Wenn die Kapazität des Systems erreicht ist, d. h. wenn die Adsorbermembranen das vorher festgelegte Maximum an Zielprodukt an Liganden gebunden hat (z. B. 70 % des 10 %-DBC Wertes), werden der Eingangsanschluss 62a und der Ausgangsanschluss 62g geschlossen.

Eine Besonderheit in Figur 4 gezeigten Ausführungsform besteht darin, dass bei der Aufreinigung die Beladung der einzelnen Membranchromatographiemodule 12 synchronisiert ist. Dies wird dadurch erreicht, dass die An- und Abströmwege S-förmig ausgelegt und zueinander spiegelverkehrt angeordnet sind.

In Figur 8a ist der Strömungsweg durch die Deckeleinrichtung 56 gezeigt, der nachfolgend als Anströmpfad bezeichnet wird. Dieser Anströmpfad verläuft so, dass in dem 3 x 3 Raster der Membranchromatographiemodule 12 zunächst drei Module 12 in einer äußeren Reihe, dann über eine erste Verbindungsstrecke 66 drei Module 12 in der benachbarten mittleren Reihe und schließlich über eine zweite Verbindungsstrecke 68 die drei verbleibenden Module 12 in der entgegengesetzten äußeren Reihe angeströmt werden. Die beiden Verbindungsstrecken 66, 68 liegen in dem Raster auf entgegengesetzten Seiten.

In jedem Segment 60 der Deckeleinrichtung 56 ist eine Abzweigung des Anströmpfads vorgesehen, die in einen oberen Eingang des zugeordneten Membranchromatographiemoduls 12 mündet. Entsprechend mündet ein unterer Ausgang des jeweiligen Membranchromatographiemoduls 12 in einen Abströmpfad, der in der Bodeneinrichtung 58 gebildet ist.

Wie bereits erwähnt, ist der Verlauf des Abströmpfads durch die Segmente 60 der Bodeneinrichtung 58 spiegelverkehrt zum Verlauf des Anströmpfads in der Deckeleinrichtung 56. Das bedeutet, dass - bezogen auf die Strömungsrichtung - das erste Membranchromatographiemodul 12 im Anströmpfad auch das erste Modul 12 im Abströmpfad ist, das zweite Membranchromatographiemodul 12 im Anströmpfad auch das zweite Modul 12 im Abströmpfad ist, usw.

Dadurch ist sichergestellt, dass der Weg vom Anströmanschluss (hier der Eingangsanschluss 62a) durch das erste Modul 12 bis zum Abströmanschluss (hier der Ausgangsanschluss 62g) insgesamt genauso lang ist wie jeweils der Weg vom Anströmanschluss durch die anderen Module 12 bis zum Abströmanschluss. Dies ist die Voraussetzung dafür, dass im Chromatogramm deutliche schmale Peaks erhalten werden.

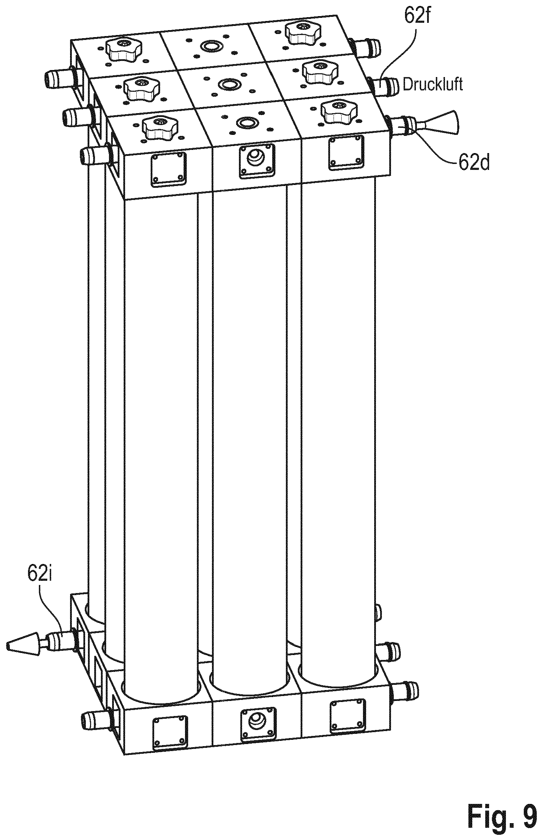

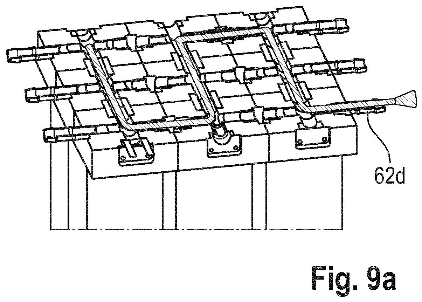

In Figur 9 ist der Elutionsschritt der Aufreinigung der Produktlösung dargestellt. Für diesen Vorgang wird das System über den mit "Fluid 4" bezeichneten Eingangsanschluss 62d betrieben. Das System wird durchströmt, und es kommt pufferbedingt zu einer Elution des Zielmoleküls in die mobile Phase. Währenddessen bleibt der Ausgangsanschluss 62i geöffnet und das Eluat (das ausgetragene Gemisch aus Lösungsmitteln und gelösten Substanzen) wird in einem Produktbeutel (product bag) oder in einem anderen Behälter (Plastiktonne, Edelstahltank o.ä.) gesammelt. Die Konzentration des Produkts wird durch die Sensoren, insbesondere die UV-Sensoren 52 und/oder Leitfähigkeitssensoren 48 im Abströmpfad nach der Gruppe der durchströmten Membranchromatographiemodule 12 ermittelt. Die Elution wird beendet, sobald das Chromatogramm die Basislinie erreicht hat, d. h. wenn die Konzentration auf etwa 0 gesunken ist. Es erfolgt dann kein Puffereinlauf mehr. Der im System verbliebene Puffer wird über den mit "Venting / pressurized air" bezeichneten Ausgangsanschluss 62f herausgedrückt. Der Eingangsanschluss 62d ist dabei geschlossen.

Gegebenenfalls wird bei der Elution nicht gewartet, bis die Basislinie vollständig erreicht ist, um eine im Allgemeinen ungewollte Verdünnung der Elution zu vermeiden (der Elutionspeak wird "geschnitten"). Falls die Membranchromatographiemodule 12 im selben Batch (intra-batch re-use) wiederverwendet werden sollen, ist zu beachten, dass aufgrund der unvollständigen Elution die Bindestellen noch "blockiert" sind. Es erfolgt dann ein weiterer Waschschritt, optional eine Reinigung, bevor ein neuer Zyklus beginnt. Je nach Peakschnittpunkt wird der Puffer in den Produktstrom oder in einen Strömungsweg zum Abfallbeutel (waste bag) gedrückt, und anschließend wird der Ausgangsanschluss 62f geschlossen.

Ähnlich wie beim Aufreinigungsschritt sind im Hinblick auf eine Synchronisation der Elutionspeaks im Elutionsschritt die An- und Abströmwege S-förmig ausgelegt und zueinander spiegelverkehrt angeordnet, wie in Figur 9a gezeigt. Die Reihenfolge der Membranchromatographiemodule 12 im Anströmpfad bzw. im Abströmpfad ist im Vergleich zum Aufreinigungsschritt somit die gleiche. Es gilt auch hier, dass - bezogen auf die Strömungsrichtung - das erste Membranchromatographiemodul 12 im Anströmpfad auch das erste Modul 12 im Abströmpfad ist, das zweite Membranchromatographiemodul 12 im Anströmpfad auch das zweite Modul 12 im Abströmpfad ist, usw. Allgemein ist auch hier das Ziel, dass die Wege vom Anströmanschluss (hier der Eingangsanschluss 62d) durch das jeweilige Modul 12 bis zum Abströmanschluss (hier der Ausgangsanschluss 62i) alle möglichst genau gleich lang sind.

Da die Kapazität von Membranadsorbern in den meisten Fällen nicht ausreicht, um einen kompletten Produktionsbatch in einem Ablauf aufzureinigen, kommt üblicherweise - wie bereits angedeutet - ein sogenanntes Multi-Cycling-Konzept zum Einsatz, bei dem die Membranchromatographiemodule 12 wiederverwendet werden (intra-batch re-use). In diesem Fall startet der Prozess nach der Elution erneut beim Wasch- oder Sanitierungsschritt. Anstelle des Waschschritts kann auch mit dem Äquilibrierungsschritt begonnen werden.

Im Falle eines Multi-Cycling-Betriebs werden alle Elutionen aus den einzelnen Zyklen vollkommen separat von den übrigen Medien über einen festgelegten Ausgang geleitet und in einem Beutel oder einem anderen Behälter gesammelt (Pooling).

Aufgrund der in der Einweg-Vorrichtung 10 vorgesehenen, mit der Steuereinheit verbundenen Mehrwegeventile 44 ist eine Automatisierung oder zumindest eine Teilautomatisierung der oben beschriebenen Prozessschritte einfach zu realisieren. Maßgeblich hierfür sind die Sensoren 48, 50, 52, 54, welche zum einen signalisieren, wann ein Medium/Puffer in das System eintritt bzw. austritt, und zum anderen das Signal für das eigentliche Chromatogramm ausgeben. Durch die Definition von Signalschwellenwerten lassen sich Schnittpunkte definieren, an welchen die Steuereinheit automatisiert Umschaltungen vornehmen kann. Dies wird nachfolgend anhand von zwei Beispielen kurz erläutert.
1. Beispiel: 1-molare Natronlauge als Reinigungsmedium lässt sich aufgrund des hohen pH-Werts gut vom Laufpuffer unterscheiden. Es ist eine hinreichende Entfernung des Reinigungsmediums erforderlich: Nach dem Sanitisierungsschritt muss mit hinreichend Puffer gespült werden, bis v. a. der pH-Wert (ggf. auch die Leitfähigkeit) am Systemausgang einen definierten Wert erreicht hat (bzw. haben). In diesem Fall erfolgt ein Umschalten des Eingangsanschlusses 62e und des Ausgangsanschlusses 62j für den Spülpuffer zum Eingangsanschluss 62b bzw. Ausgangsanschlusses 62k für den Äquilibrierungspuffer oder einen anderen Puffer.
2. Beispiel: Die Elution wird gestartet und erreicht einen maximalen UV-Wert. Nach dem Durchlauf eines gewissen Volumens klingt das Signal auf einen vorgegebenen Signalschwellenwert ab. Dieses Ereignis wird erkannt und dazu genutzt, um automatisiert vom Eingangsanschluss 62d und dem Ausgangsanschluss 62i zum Eingangsanschluss 62c und dem Ausgangsanschluss 62h für die Natronlauge zu wechseln (sofern nicht ein weiterer Spülschritt vorgelagert ist), um einen nächsten Zyklus zu initialisieren.

Die Materialien, die bei der Einweg-Vorrichtung 10 Verwendung finden (auch für etwaige flexible Schlauchleitungen etc.), sind alle sterilisierbar, insbesondere mittels Gammastrahlung, Wärme oder Begasung, bzw. autoklavierbar. Vor der Sterilisierung kann die Einweg-Vorrichtung 10 auch vorgereinigt (Spülen) werden. Die Einweg-Vorrichtung 10 kann somit im vormontierten, d. h. anschlussfertigen Zustand sterilisiert und verpackt oder zuerst verpackt und mit zusammen mit der Verpackung sterilisiert werden. Die gesamte Einweg-Vorrichtung 10 kann nach der Auslieferung an einen Kunden dort mittels bereits vormontierter Steril-Konnektoren (z. B. AseptiQuik^{®}) oder sterilem Verschweißen von Ein- und Ausgangsschläuchen in einen bestehenden Prozessstrang eingebaut werden, d. h. sie ist sofort einsatzbereit. Vorzugsweise erfolgt die Auslieferung mit Sterilbarrieren am Ein- und Ausgang der Einweg-Vorrichtung 10. Falls vor der Auslieferung eine Vorreinigung stattgefunden hat, entfällt für den Anwender auch der Aufwand für das Freispülen, z. B. die Entfernung von Glycerin, das zur Stabilisierung der Membranen verwendet wird.

Um eine fachgerechte Entsorgung der Einweg-Vorrichtung 10 zu ermöglichen, welche einen Sterilisationsschritt in einem Autoklav beinhaltet, sind die Membranchromatographiemodule 12 so in der Einweg-Vorrichtung 10 miteinander verbunden, dass sie ohne großen Aufwand voneinander getrennt werden können. Die Trennung erfolgt bevorzugt steril mittels dem Produkt Quickseal^{®} (Aseptic Tube Sealing System) oder BioSealer^{®}, um eine Kontamination zu vermeiden. Für die Entsorgung werden die abgetrennten Segmente in ihrer Größe und ihrem Gewicht so gewählt, dass sie von einer Person getragen und in einen Autoklav transferiert werden können. Jedes abgetrennte Filtrationssegment weist mindestens ein Ventil auf, das während des Autoklavierens geöffnet werden kann, um einen Überdruck im Filtrationssegment während der Sterilisation zu vermeiden.

### Bezugszeichenliste

- 10: Einweg-Vorrichtung zur Separation oder Aufreinigung
- 12: Membranchromatographiemodul
- 14: Halterung
- 18: Querstrebe
- 20: Haltemittel
- 22: Rohrleitung
- 24: Abzweigung
- 26: Zu- und Ablaufeinheit
- 28: Zulaufeinrichtung
- 30: Ablaufeinrichtung
- 32: Gehäusewand
- 34: Außenanschluss
- 36: Verbindungsbauteil
- 38: Verschluss
- 40: Zufuhrleitung
- 42: Vorfilter
- 44: Ventil
- 46: Entlüftungsventil
- 48: Leitfähigkeitssensor
- 50: pH-Sensor
- 52: UV-Sensor
- 54: Drucksensor
- 56: Deckeleinrichtung
- 58: Bodeneinrichtung
- 60: Segment
- 62a-k: Anschlüsse
- 64: Leitungsstück
- 66: erste Verbindungsstrecke
- 68: zweite Verbindungsstrecke

## Patentansprüche

1. Einweg-Vorrichtung (10) zur Separation oder Aufreinigung eines großen Volumens eines Stoffgemischs,
mit einer Mehrzahl von Membranchromatographiemodulen (12), die in einem vorgegebenen Raster fest angebracht sind, und
einem Leitungssystem zur Anbindung der Membranchromatographiemodule (12) und zur Verbindung der Membranchromatographiemodule (12) untereinander,
wobei die Membranchromatographiemodule (12) hinsichtlich Membranadsorbertyp, Bauart und/oder Baugröße, und/oder das Leitungssystem, für einen Separations- oder Aufreinigungsprozess hinsichtlich der Betriebsweise vorkonfiguriert oder vorkonfigurierbar sind,
**dadurch gekennzeichnet, dass**
eine Deckeleinrichtung (56) und/oder eine Bodeneinrichtung (58) vorgesehen ist, die an der Oberseite bzw. an der Unterseite einer Mehrzahl von Membranchromatographiemodulen (12) angebracht ist und die Membranchromatographiemodule (12) in einem vorgegebenen Raster in Position hält,
wobei in der Deckeleinrichtung (56) und/oder der Bodeneinrichtung (58) wenigstens ein Teil des Leitungssystems der Einweg-Vorrichtung (10) gebildet ist, mit Verbindungsleitungen zwischen den Membranchromatographiemodulen (12),
wobei die Deckeleinrichtung (56) und/oder die Bodeneinrichtung (58) einzelne, fest miteinander verbundene Segmente (60) aufweist, die jeweils einem Membranchromatographiemodul (12) zugeordnet sind,
wobei die vorkonfigurierte Betriebsweise vorsieht, dass die Membranchromatographiemodule (12) so angeordnet sind, dass einige der Module (12) oder alle ausgehend von einem Anströmpfad parallel angeströmt werden, oder dass wenigstens eine Gruppe von Modulen parallel zu wenigstens einer weiteren Gruppe von Modulen angeströmt wird, wobei die Module innerhalb der Gruppen sequentiell angeströmt werden, und
wobei die Strömungswege durch die parallel angeströmten Membranchromatographiemodule (12) jeweils gleich lang sind.

2. Einweg-Vorrichtung (10) nach Anspruch 1, **dadurch gekennzeichnet, dass** wenigstens einige der Membranchromatographiemodule (12) als Wickelmodule ausgebildet sind.

3. Einweg-Vorrichtung (10) nach Anspruch 1 oder 2, **dadurch gekennzeichnet, dass** die Einweg-Vorrichtung (10) wenigstens zwei voneinander getrennte Eingänge aufweist, die unterschiedlichen Medien zugewiesen sind.

4. Einweg-Vorrichtung (10) nach einem der vorhergehenden Ansprüche, **dadurch gekennzeichnet, dass** wenigstens einem Membranchromatographiemodul (12) ein Vorfilter vorgeschaltet ist, wobei der Vorfilter vorzugsweise ein plissiertes Filterelement enthält, und wobei der Vorfilter vorzugsweise eine Porengröße von etwa 0,45 µm aufweist.

5. Einweg-Vorrichtung (10) nach einem der vorhergehenden Ansprüche, **dadurch gekennzeichnet, dass** wenigstens einige der Leitungen des Leitungssystems als starre Leitungen ausgebildet sind.

6. Einweg-Vorrichtung (10) nach einem der vorhergehenden Ansprüche, **dadurch gekennzeichnet, dass** in den Leitungen des Leitungssystems an mehreren Stellen automatisierte Ventile (44) vorgesehen sind, die von einer Steuereinheit gesteuert werden.

7. Einweg-Vorrichtung (10) nach Anspruch 6, **dadurch gekennzeichnet, dass** an einer Stelle im Leitungssystem, an der ein Ventil (44) angeordnet ist, ein zusätzlicher Ein- oder Ausgang vorgesehen ist.

8. Einweg-Vorrichtung (10) nach Anspruch 6 oder 7, **gekennzeichnet durch** wenigstens einen Einweg-Leitfähigkeitssensor (48) und/oder einen Einweg-pH-Sensor (50) und/oder einen Einweg-UV-Sensor (52), der vor einem Eingang und/oder hinter einem Ausgang eines Membranchromatographiemoduls (12) oder einer Gruppe von zusammengeschalteten Membranchromatographiemodulen (12) angeordnet ist.

9. Einweg-Vorrichtung (10) nach einem der Ansprüche 6 bis 8, **gekennzeichnet durch** wenigstens einen Einweg-Drucksensor (54) und/oder einen Einweg-Flusssensor, der in einer der Leitungen des Leitungssystems angeordnet ist.

10. Einweg-Vorrichtung (10) nach Anspruch 8 oder 9, **dadurch gekennzeichnet, dass** der bzw. die Sensoren (48, 50, 52, 54) mit der Steuereinheit verbunden sind.

11. Einweg-Vorrichtung (10) nach einem der vorhergehenden Ansprüche, **dadurch gekennzeichnet, dass** die Deckeleinrichtung (56) und/oder die Bodeneinrichtung (58), insbesondere deren Segmente (60), individuell vorkonfigurierte oder vorkonfigurierbare Anschlüsse (62) und Leitungsstücke (64) aufweist.

12. Einweg-Vorrichtung (10) nach einem der vorhergehenden Ansprüche, **dadurch gekennzeichnet, dass** wenigstens ein Sensor (48, 50, 52, 52, 54) oder eine spektroskopische Einrichtung an einem ansonsten nicht genutzten Anschluss (62) der Deckeleinrichtung (56) oder der Bodeneinrichtung (58) angebracht ist.

13. Verfahren zur Separation oder Aufreinigung eines großen Volumens eines Stoffgemischs unter Verwendung einer Einweg-Vorrichtung (10) nach einem der vorhergehenden Ansprüche, wobei die Einweg-Vorrichtung (10) mehrere automatisierte Ventile (44) und Sensoren (48, 50, 52, 52, 54), insbesondere wenigstens einen Einweg-Leitfähigkeitssensor (48), einen Einweg-pH-Sensor (50), einen Einweg-UV-Sensor (52), einen Einweg-Drucksensor (54) oder einen Einweg-Flusssensor, umfasst, die mit einer Steuereinheit verbunden sind, wobei die automatisierten Ventile (44) basierend auf einer Auswertung der von den Sensoren (48, 50, 52, 54) gemessenen Parametern gesteuert werden.

14. Verfahren nach Anspruch 13, **dadurch gekennzeichnet, dass** für die Betriebsparameter vorab Signalschwellenwerte definiert werden und dass in Abhängigkeit von einem Über- bzw. Unterschreiten der Signalschwellenwerte automatisch vorgegebene Prozessschritte der Separation oder Aufreinigung durchgeführt werden, insbesondere eine Ventilschaltsequenz zur Sammlung ausgewählter und getrennter Fraktionen.

## Claims

1. Single-use device (10) for separating or purifying a large volume of a mixture of substances,
comprising a plurality of membrane chromatography modules (12) which are fixedly mounted in a predetermined grid, and
a line system for linking the membrane chromatography modules (12) and for connecting the membrane chromatography modules (12) to each other,
wherein the membrane chromatography modules (12), with regard to membrane adsorber type, design and/or size, and/or the line system are preconfigured or adapted to be preconfigured, with regard to the mode of operation, for a separation or purification process,
**characterized in that**
a cover means (56) and/or a bottom means (58) is provided, which is attached to the upper side or the lower side, respectively, of a plurality of membrane chromatography modules (12) and holds the membrane chromatography modules (12) in position in a predetermined grid,
wherein at least part of the line system of the single-use device (10) is formed in the cover means (56) and/or the bottom means (58), with connecting lines between the membrane chromatography modules (12),
wherein the cover means (56) and/or the bottom means (58) comprises individual, firmly interconnected segments (60), each of which is assigned to a membrane chromatography module (12),
wherein the preconfigured mode of operation provides that the membrane chromatography modules (12) are arranged such that, starting from an inflow path, a flow to some or all of the modules (12) is parallel, or such that a flow to at least one group of modules is parallel to at least one further group of modules, while the flow to the modules within the groups is sequential,
wherein the flow paths through the membrane chromatography modules (12) exposed to a parallel flow are each of equal length.

2. Single-use device (10) according to claim 1, **characterized in that** at least some of the membrane chromatography modules (12) are configured as spiral-wound modules.

3. Single-use device (10) according to claim 1 or 2, **characterized in that** the single-use device (10) has at least two separate inlets which are assigned to different media.

4. Single-use device (10) according to any one of the preceding claims, **characterized in that** a prefilter is arranged upstream of at least one membrane chromatography module (12), the prefilter preferably comprising a pleated filter element, and the prefilter preferably having a pore size of about 0.45 µm.

5. Single-use device (10) according to any one of the preceding claims, **characterized in that** at least some of the lines of the line system are configured as rigid lines.

6. Single-use device (10) according to any one of the preceding claims, **characterized in that** automated valves (44), which are controlled by a control unit, are provided at several points in the lines of the line system.

7. Single-use device (10) according to claim 6, **characterized in that** an additional inlet or outlet is provided at a point in the line system where a valve (44) is arranged.

8. Single-use device (10) according to claim 6 or 7, **characterized by** at least one single-use conductivity sensor (48) and/or one single-use pH sensor (50) and/or one single-use UV sensor (52), which is arranged upstream of an inlet and/or downstream of an outlet of a membrane chromatography module (12) or a group of interconnected membrane chromatography modules (12).

9. Single-use device (10) according to any one of claims 6 to 8, **characterized by** at least one single-use pressure sensor (54) and/or one single-use flow sensor arranged in one of the lines of the line system.

10. Single-use device (10) according to claim 8 or 9, **characterized in that** the sensor(s) (48, 50, 52, 54) are connected to the control unit.

11. Single-use device (10) according to any one of the preceding claims, **characterized in that** the cover means (56) and/or the bottom means (58), in particular the segments (60) thereof, include individually preconfigured or preconfigurable ports (62) and line sections (64).

12. Single-use device (10) according to any one of the preceding claims, **characterized in that** at least one sensor (48, 50, 52, 52, 54) or spectroscopic means is attached to an otherwise unused port (62) of the cover means (56) or the bottom means (58).

13. Method of separating or purifying a large volume of a mixture of substances, using a single-use device (10) according to any one of the preceding claims, the single-use device (10) comprising a plurality of automated valves (44) and sensors (48, 50, 52, 52, 54), in particular at least a single-use conductivity sensor (48), a single-use pH sensor (50), a single-use UV sensor (52), a single-use pressure sensor (54) or a single-use flow sensor, which are connected to a control unit, the automated valves (44) being controlled based on an evaluation of parameters measured by the sensors (48, 50, 52, 54).

14. Method according to claim 13, **characterized in that** signal threshold values are defined in advance for the operating parameters, and **in that**, depending on an exceeding or dropping below the signal threshold values, predetermined process steps of the separation or purification are automatically carried out, in particular a valve switching sequence for collecting selected and separated fractions.

## Revendications

1. Dispositif à usage unique (10) pour la séparation ou purification d'un grand volume d'un mélange de substances,
comprenant une pluralité de modules de chromatographie sur membrane (12), qui sont montés fixes en une grille prédéfinie, et
un système de conduites pour raccorder les modules de chromatographie sur membrane (12) et pour relier les modules de chromatographie sur membrane (12) entre eux,
dans lequel les modules de chromatographie sur membrane (12) sont préconfigurés ou peuvent être préconfigurés en ce qui concerne le type d'adsorbeur à membrane, la structure et/ou l'encombrement, et/ou le système de conduites, pour un processus de séparation ou de purification en ce qui concerne le fonctionnement,
**caractérisé en ce que**
un système de couvercle (56) et/ou un système de fond (58) est prévu, qui est monté sur la face supérieure ou sur la face inférieure d'une pluralité de modules de chromatographie sur membrane (12) et maintient les modules de chromatographie sur membrane (12) en une grille prédéfinie en position,
dans lequel au moins une partie du système de conduites du dispositif à usage unique (10) est formée dans le système de couvercle (56) et/ou le système de fond (58), avec des conduites de liaison entre les modules de chromatographie sur membrane (12),
dans lequel le système de couvercle (56) et/ou le système de fond (58) présente des segments (60) individuels, reliés fixement les uns aux autres, qui sont associés respectivement à un module de chromatographie sur membrane (12),
dans lequel le fonctionnement préconfiguré prévoit que les modules de chromatographie sur membrane (12) soient disposés de sorte que certains des modules (12) ou tous soient balayés parallèlement par un écoulement partant d'un trajet d'écoulement, ou qu'au moins un groupe de modules soit balayé parallèlement à au moins un autre groupe de modules par un écoulement, dans lequel les modules sont balayés par un écoulement séquentiellement à l'intérieur des groupes, et
dans lequel les voies d'écoulement à travers les modules de chromatographie sur membrane (12) traversés parallèlement sont respectivement de même longueur.

2. Dispositif à usage unique (10) selon la revendication 1, **caractérisé en ce qu'**au moins certains des modules de chromatographie sur membrane (12) sont réalisés sous la forme de modules enroulés.

3. Dispositif à usage unique (10) selon la revendication 1 ou 2, **caractérisé en ce que** le dispositif à usage unique (10) présente au moins deux entrées séparées l'une de l'autre, qui sont affectées à différents milieux.

4. Dispositif à usage unique (10) selon l'une quelconque des revendications précédentes, **caractérisé en ce qu'**un préfiltre est monté en amont au moins d'un module de chromatographie sur membrane (12), dans lequel le préfiltre contient de préférence un élément filtre plissé, et dans lequel le préfiltre présente de préférence une taille de pores d'environ 0,45 µm.

5. Dispositif à usage unique (10) selon l'une quelconque des revendications précédentes, **caractérisé en ce qu'**au moins certaines des conduites du système de conduites sont réalisées sous la forme de conduites rigides.

6. Dispositif à usage unique (10) selon l'une quelconque des revendications précédentes, **caractérisé en ce que** des vannes (44) automatisées, qui sont commandées par une unité de commande, sont prévues dans les conduites du système de conduites à plusieurs endroits.

7. Dispositif à usage unique (10) selon la revendication 6, **caractérisé en ce qu'**une entrée ou sortie supplémentaire est prévue à un endroit dans le système de conduites où une vanne (44) est disposée.

8. Dispositif à usage unique (10) selon la revendication 6 ou 7, **caractérisé par** au moins un capteur de conductivité à usage unique (48) et/ou un capteur de pH à usage unique (50) et/ou un capteur d'UV à usage unique (52), qui est disposé devant une entrée et/ou derrière une sortie d'un module de chromatographie sur membrane (12) ou d'un groupe de modules de chromatographie sur membrane (12) interconnectés.

9. Dispositif à usage unique (10) selon l'une quelconque des revendications 6 à 8, **caractérisé par** au moins un capteur de pression à usage unique (54) et/ou un capteur de flux à usage unique, qui est disposé dans une des conduites du système de conduites.

10. Dispositif à usage unique (10) selon la revendication 8 ou 9, **caractérisé en ce que** le ou les capteurs (48, 50, 52, 54) sont reliés à l'unité de commande.

11. Dispositif à usage unique (10) selon l'une quelconque des revendications précédentes, **caractérisé en ce que** le système de couvercle (56) et/ou le système de fond (58), en particulier leurs segments (60), présente des raccords (62) et tronçons (64) préconfigurés ou pouvant être préconfigurés individuellement.

12. Dispositif à usage unique (10) selon l'une quelconque des revendications précédentes, **caractérisé en ce qu'**au moins un capteur (48, 50, 52, 52, 54) ou un système spectroscopique est monté sur un raccord (62) par ailleurs non utilisé du système de couvercle (56) ou du système de fond (58).

13. Procédé de séparation ou purification d'un grand volume d'un mélange de substances à l'aide d'un dispositif à usage unique (10) selon l'une quelconque des revendications précédentes, dans lequel le dispositif à usage unique (10) comprend plusieurs vannes (44) automatisées et capteurs (48, 50, 52, 52, 54), en particulier au moins un capteur de conductivité à usage unique (48), un capteur de pH à usage unique (50), un capteur d'UV à usage unique (52), un capteur de pression à usage unique (54) ou un capteur de flux à usage unique, qui sont reliés à une unité de commande, dans lequel les vannes (44) automatisées sont commandées sur la base d'une évaluation des paramètres mesurés par les capteurs (48, 50, 52, 54).

14. Procédé selon la revendication 13, **caractérisé en ce que** des valeurs de seuil de signal sont définies préalablement pour les paramètres de fonctionnement et qu'en fonction d'un dépassement ou passage en dessous des valeurs de seuil de signal des étapes de processus prédéfinies automatiquement de la séparation ou purification, en particulier une séquence de commutation de vannes pour la collecte de fractions choisies et séparées, sont mises en œuvre automatiquement.
